# FASCICULE DE BREVET EUROPEEN

(11) **EP 1 277 633 B1**
(45) Date de publication et mention de la délivrance du brevet: **02.11.2005**
(21) Numéro de dépôt: 02360216.2
(22) Date de dépôt: 19.07.2002
(51) Int. Cl.: B60R 25/00, G07C 9/00

(54) **Dispositif d'identification électronique**
Elektrische Identifizierungsvorrichtung
Electronic identification device

(30) Priorité: 20.07.2001 FR 0109720
(43) Date de publication de la demande: 22.01.2003
(73) Titulaire: ELA Innovation S.A., 30000 Nimes (FR)
(72) Inventeur: Bonzom, Pierre, 34570 Pignan (FR)
(74) Mandataire: Rhein, Alain

(56) Documents cités:
- EP-A- 1 043 464
- WO-A-01/25060
- WO-A-96/37063
- US-A- 5 420 925
- US-B1- 6 225 889

## Description

L'invention concerne un dispositif actif d'identification électronique sécurisé d'un signal, notamment pour la détection de la présence ou non de une ou plusieurs personnes, ou objets, dans un espace prédéfini appelé cellule de détection.

Un tel dispositif concerne particulièrement la détection et l'identification de personnes habilitées par exemple à pénétrer dans un véhicule.

Il est connu un certain nombre de dispositifs d'accès à des véhicules ou à des locaux, de type serrure électronique, basés sur la reconnaissance d'un code digital entré par le requérant à l'ouverture, ou sur un échange électronique basique d'informations entre un émetteur et un récepteur. Ces systèmes ont pour inconvénient principal d'être peu fiables, à savoir qu'un tiers peut aisément se substituer à une personne autorisée. De plus ils nécessitent la présence physique du requérant à proximité immédiate de ladite serrure.

On connaît par le document WO 96/37063, un système actif d'identification à commande manuelle par action sur une télécommande. Le signal radio entre l'émetteur, c'est-à-dire la télécommande, et le récepteur est sécurisé par une méthode de génération de codes tournants associé à une méthode de cryptage. Chaque action sur la télécommande permet d'émettre une trame nouvelle et différente, en sorte qu'il est impossible d'enregistrer frauduleusement et d'utiliser, en vue d'une réémission avec un autre émetteur, une trame émise pour se faire passer pour la personne autorisée.

Le système proposé dans ce document présente l'inconvénient que l'action d'identification n'est pas automatique, elle est manuelle. Si l'utilisateur appuie par inadvertance sur sa télécommande il désynchronise la succession de codes tournants préprogrammés entre l'émetteur et le récepteur. Dans ce cas il doit actionner plusieurs fois sa télécommande afin que le récepteur passe dans un mode alternatif et interprète cette succession comme une demande de re-synchronisation. Ainsi, une personne mal intentionnée pourrait enregistrer la totalité de cette séquence de re synchronisation, et serait alors capable d'avoir la même action que la personne autorisée, et se faire passer pour elle.

On connaît également par le document WO 01/25060 un système passif permettant d'identifier automatiquement la personne munie de l'émetteur, ce dernier ne comporte pas de pile mais reçoit l'énergie nécessaire à son fonctionnement par induction d'une onde électromagnétique de puissance élevée émise par le récepteur. Ce système est doté d'une fonction qui permet d'évaluer la distance entre le récepteur et l'émetteur par analyse du temps de réponse de la part de l'émetteur, le temps de propagation de l'onde étant fonction de la distance de propagation et de la vitesse de propagation.

L'inconvénient réside en ce que l'identification passive ne permet que des portées d'identification faibles, inférieure au mètre, puisque l'émetteur doit recevoir une puissance inductive importante.

En outre, la mesure de distance par analyse de temps de vol exige de mesurer des temps très faibles (<10ns) et par conséquent une électronique de mesure de temps très précise, donc complexe et d'un coût très élevé.

Connaissant les deux documents précités on pourrait être tenté de réaliser un dispositif passif d'identification automatique avec évaluation de la distance entre émetteur et récepteur par analyse de temps de vol et sécurisation du signal radio par codage tournant et cryptage. Toutefois, l'interrogation permanente de l'émetteur de la part du récepteur amène à une désynchronisation systématique des deux éléments dès que l'émetteur est hors de portée du récepteur, et par conséquent à une action de re synchronisation dès que l'émetteur revient dans le champ de portée du récepteur. La conséquence est un délai d'identification long, du fait de l'attente des émissions successives de la méthode alternative de re synchronisation, et un niveau de sécurité faible puisque la séquence de re synchronisation est émise quasi systématiquement. Un tel dispositif présente donc les mêmes inconvénients que celui du document WO 01/25060.

On pourrait également imaginer un dispositif actif d'identification manuelle avec évaluation de la distance entre émetteur et récepteur par analyse de temps de vol et sécurisation du signal radio par codage tournant et cryptage. Les inconvénients, action manuelle et désynchronisation, du système du document WO 96/37063 demeureraient effectifs, auxquels s'ajouteraient les inconvénients de complexité de l'électronique pour la mesure du temps de vol.

Un autre dispositif connu de l'état de la technique est décrit dans le document EP 1 043 464 présentant un dispositif actif d'identification électronique automatique sécurisé pour antivol de véhicule automobile ou autre, ou la détection de la présence ou non de une ou plusieurs personnes, ou objets dans un espace prédéfini appelé cellule de détection, comprenant au moins un émetteur, lié à un utilisateur potentiel, et un récepteur, lié à l'objet à protéger, lesdits émetteur et récepteur comportant des moyens d'évaluation de la distance seuil d'activation de la serrure du dit véhicule par l'analyse de la puissance reçue par ledit récepteur.

La présente invention a pour but de remédier aux divers inconvénients précités, en proposant un dispositif actif d'identification électronique automatique sécurisé pour antivol de véhicule automobile ou autre, ou la détection de la présence ou non de une ou plusieurs personnes, ou objets, dans un espace prédéfini appelé cellule de détection, comprenant au moins un émetteur, lié à un utilisateur potentiel, et un récepteur, lié à l'objet à protéger, lesdits émetteur et récepteur comportant des moyens d'évaluation de la distance seuil d'activation de la serrure dudit véhicule par l'analyse de la puissance reçue par ledit récepteur, afin de permettre avantageusement cette activation peu de temps avant l'arrivée de l'utilisateur à proximité immédiate dudit véhicule.

Le dispositif selon l'invention se caractérise essentiellement en ce que d'une part le ou les émetteurs comportent des moyens de codage tournant se présentant sous la forme de moyens électroniques aptes à assurer une fonction de codage tournant permettant d'émettre un message différent à chaque fois à l'aide de codes, des moyens de cryptage consistant en des moyens électroniques aptes à assurer une fonction de cryptage assurant l'émission d'un message différent à chaque envoi à l'aide d'une clé privée et ne donnant pas d'information sur la valeur du code, et des moyens d'encodage consistant en des moyens électroniques aptes à assurer une fonction d'encodage transposant le code devant être émis régulièrement dans une base de codes présentant une faible probabilité de niveaux hauts, respectivement, et d'autre part le récepteur comporte des moyens de désencodage sous la forme de moyens électroniques aptes à, assurer une fonction de décodage réciproque inverse de la fonction d'encodage, et assurant la transposition d'un codeur de code dans sa base de codage d'origine, des moyens de décryptage consistant en des moyens électroniques aptes à assurer une fonction de décryptage réciproque inverse de la fonction de cryptage permettant de donner en sortie la valeur du code tournant en ayant en entrée le message crypté et la clé, et des moyens de décodage tournant consistant en des moyens électroniques aptes à assurer une fonction de décodage tournant réciproque inverse de la fonction de codage tournant et rétablissant le message originel par le code et la date, respectivement.

La technologie active utilisée permet une portée d'identification élevée, de plusieurs dizaines de mètres, les performances d'un tel système sont donc bien supérieures aux systèmes passifs existants. Par ailleurs, l'identification est automatique, et la méthode d'évaluation de distance est réalisée par analyse de la puissance reçue, laquelle est décroissante en fonction de la distance d'éloignement, ce qui demande une électronique classique d'un faible coût de revient et permet ainsi une large diffusion et multiplie les applications.

En outre, la génération de la succession des codes tournants est avantageusement synchronisée par une horloge temps réel, pour la génération d'une date, dans l'émetteur et par une horloge temps réel, pour la génération d'une date, dans le récepteur, en sorte que cette synchronisation ne dépend plus de l'usage du système et qu'une désynchronisation des deux systèmes est quasi impossible. Le message émis est ainsi en permanence sécurisé.

D'autres buts et avantages de la présente invention apparaîtront au cours de la description qui va suivre se rapportant à un mode de réalisation donné à titre d'exemple indicatif et non limitatif et dans lequel :
- la figure 1 représente un synoptique général de l'invention.
- la figure 2 représente un synoptique de l'émetteur.
- la figure 3 représente un synoptique du récepteur.

Le dispositif selon l'invention comporte un émetteur 2 et un récepteur 3 en communication autonome permanente.

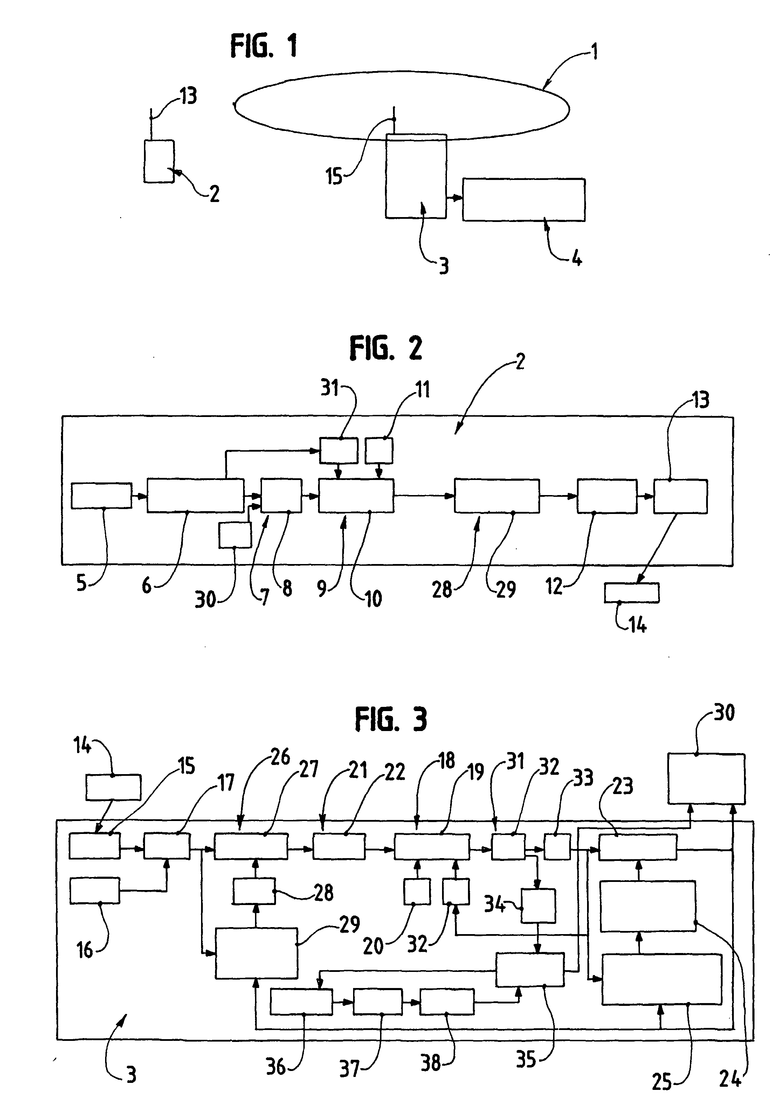

Tel que représenté sur la figure 1, l'invention a pour objectif de détecter la présence ou non d'une ou plusieurs personnes, ou objets, dans un espace prédéfini appelé cellule de détection 1. Pour remplir cette fonction, la ou les personnes autorisées sont munies d'un émetteur 2, émettant régulièrement, grâce à sa temporisation, un code d'identification. La cellule de détection est définie par un récepteur 3 analysant la puissance du signal reçu et la valeur du code. Elle émet en conséquence un signal de présence 4, ledit signal étant apte à déclencher l'ouverture de la serrure du véhicule.

L'émetteur tel que représenté sur la figure 2 comporte les éléments suivants :
- une alimentation 5 propre, système actif, sous forme de batterie,
- une horloge 6 de temporisation permettant d'émettre de façon cadencée et de dater les signaux envoyés,
- un moyen de codage tournant 7 apte à mettre en oeuvre une fonction de codage tournant 8 à l'aide d'un code associé 30,
- un moyen de cryptage 9 apte à mettre en oeuvre une fonction de cryptage 10 à l'aide d'une clé de cryptage associée 11 et d'un code associé 30,
- un moyen d'encodage 28 apte à mettre en oeuvre une fonction d'encodage 29 à faible présence de niveaux hauts,
- un boîtier émetteur 12, système de modulation et d'émission des ondes,
- une antenne émettrice 13,
- un signal porté 14,

Inversement, le récepteur 3 tel que représenté sur la figure 3 comporte l'ensemble des éléments de l'émetteur 2 agencés de façon inverse, ainsi que des moyens d'évaluation du seuil d'activation :
- un signal porté 14,
- une antenne réceptrice 15,
- une alimentation 16 propre, système actif, sous forme de batterie,
- un boîtier récepteur 17, système de démodulation et de réception des ondes,
- un moyen de désencodage 21 apte à mettre en oeuvre une fonction de désencodage 22,
- un moyen de décryptage 18 apte à mettre en oeuvre une fonction de décryptage 19 à l'aide d'une clé de décryptage 20 et d'une date 32 associées,
- un moyen de décodage tournant 31 apte à mettre en oeuvre une fonction de décodage tournant 32 à faible présence de niveaux hauts, émettant un code 33 et une date 34,
- un comparateur de dates 35, en aval de ladite date 34, associé à une fonction de synchronisation 36, une temporisation 37 et une date interne 38,
- un comparateur de codes 23 associé à une liste de codes 24 et à une procédure de validation de nouveaux codes 25,
- un signal de présence 30, agissant sur la serrure du véhicule,
- ainsi qu'en aval du boîtier récepteur 17 un moyen d'évaluation du seuil 26 sous forme d'une fonction comparateur 27 associée à une consigne de seuil 28 et à une fonction de correction de seuil 29,

La puissance du signal 14 en provenance de l'émetteur 2 et reçu par le récepteur 3 décroît en fonction de la distance entre l'émetteur 2 et le récepteur 3. Le récepteur 3 compare la puissance reçue à une consigne 28 de niveau de seuil prédéfini et renvoie le code reçu si ce signal est supérieur au niveau prédéfini. Par la suite ce code est comparé à une liste de codes 24 autorisés.

L'autonomie de l'émetteur 2 est fonction de la durée d'émission. La temporisation 6 a pour objectif de limiter cette durée d'émission. La fonction d'encodage 29 permet également de réduire le temps d'émission.

Dans le cas du codage simple, il est possible à un tiers d'utiliser un dispositif externe, tel un analyseur de spectre, un récepteur large bande et un oscilloscope, afin d'identifier la fréquence porteuse du signal modulé 14, le délai de temporisation du code et la valeur du code. Ceci à condition que ledit tiers se trouve à proximité du récepteur 3. Ledit tiers aurait ainsi toutes les informations nécessaires afin de construire un émetteur 2 ayant la même fréquence porteuse du signal modulé 14, le même délai de temporisation du code et la même valeur de code. Ledit tiers pourrait ainsi simuler la présence de la personne ,ou de l'objet, autorisée, et obtenir ainsi le déverrouillage de la serrure électronique du véhicule. Le dispositif tel que décrit précédemment présente donc un niveau de sécurité faible.

Afin de pallier ce défaut, l'invention utilise un moyen de codage tournant 7 mettant en oeuvre une fonction de codage tournant 8.

Dans le cas du codage tournant, afin d'obtenir un niveau de sécurité plus élevé, il est associé au dispositif précédent une fonction bijective de codage tournant permettant d'émettre un message différent à chaque envoi.

Le module de temporisation, ou horloge 6, du dispositif précédent est associé à un compteur et permet de donner une date 32 aux envois. Le message envoyé est une fonction mathématique qui dépend de la date 31 et de la valeur du code 8. Ainsi, le message envoyé est différent à chaque envoi. Un tiers advenant à identifier le signal émis 14 à un instant donné et à tenter de re émettre le même signal 14 ne pourra point simuler la présence de la personne autorisée. Ce niveau de sécurité est maintenu tant que le tiers ne connaît pas la fonction mathématique entre la sortie, en l'occurrence le message envoyé, et les entrées, à savoir la date 31 et la valeur du code 8.

Cependant, il est possible audit tiers, par l'analyse à l'aide d'un ordinateur et d'un logiciel idoine de la série de messages émis par le dispositif, d'identifier la fonction mathématique entre la sortie et les entrées, de retrouver le code et de se synchroniser sur la date du dispositif.

Le codage tournant crypté permet de crypter le message émis de façon à émettre un message différent à chaque envoi et ne donnant pas d'information sur la valeur du code.

Le codage tournant crypté permet d'obtenir un niveau de sécurité encore plus élevé. Au dispositif précédent est associé un moyen de cryptage 9 mettant en oeuvre une fonction de cryptage 10 ne permettant pas, par analyse de la série de messages émis par le dispositif, d'identifier la fonction mathématique entre la sortie, à savoir le code tournant, et les entrées, à savoir le code et la date. La fonction de cryptage est une fonction bijective qui a en entrées le message à crypter, c'est à dire le code tournant, et une clé 11, dite clé privée, et en sortie le message à crypter. Il n'est possible de décrypter le message que si l'on connaît, par avance, la valeur de la clé 11.

A titre d'exemple on connaît dans le domaine public l'algorithme de cryptage RSA qui dispose d'une clé 11 composée à partir du produit de deux nombres premiers et d'une fonction de cryptage 10 qui consiste à élever le message en entrée à la puissance de la clé. Un tiers analysant la série de messages envoyés ne peut identifier la série codes tournants que s'il connaît la clé de cryptage. Pour ce faire, cette clé est tenue secrète et n'est connue que de l'émetteur 2 et du récepteur 3 du dispositif.

Le moyen de décryptage 18 met en oeuvre une fonction de décryptage 19 du récepteur, ladite fonction 19 connaît la clé 11 utilisée pour le cryptage 10. C'est la fonction inverse de la fonction 10 utilisée pour le cryptage. Elle permet de donner en sortie la valeur du code tournant en ayant en entrée le message crypté.

Le moyen de décodage tournant 21, mettant en oeuvre la fonction de décodage 32, est la fonction inverse de la fonction de codage 8 utilisée dans l'émetteur 2. Elle permet d'identifier le code secret de l'émetteur 2 et la date 31. Le récepteur 3 vérifie que cette date 31 est synchrone avec la sienne 32 et que le code fait partie de la liste de codes autorisés 24. On revient ici au principe de base du système. La date 31 de l'émetteur et celle 34 du récepteur doivent être synchrones ,aussi une fonction de re synchronisation 36 de la date du récepteur 34 est intégrée. Elle utilise la réception successive des dates 31 de l'émetteur pour se remettre à jour, en mettant en oeuvre une temporisation 37 et une date interne 38. Cette fonction est gérée par un comparateur de dates 35.

Si l'émetteur 2 est de type à modulation d'amplitude, la puissance consommée est bien moindre pour l'émission d'un niveau logique bas que celle d'un niveau logique haut.

L'objet du moyen d'encodage 28, mettant en oeuvre la fonction d'encodage 29 est de transposer le code devant être émis dans une base de codes qui présente une faible probabilité de niveaux hauts. Un code sur n bits peut présenter une probabilité non nulle de présence de n niveaux hauts. Ce même code peut être représenté dans une base n+1 bits en ne retenant que les codes présentant moins de (n+1) / 2 niveaux hauts. Cette fonction de transposition de base récursive permet de choisir le nombre de niveaux hauts maximum autorisés pour la représentation d'un code donné.

Le moyen de désencodage 21 met en oeuvre la fonction de désencodage 22 qui est la réciproque inverse de la fonction d'encodage 29. Elle permet de transposer un message codé dans sa base de codage d'origine.

La procédure de validation 25 des nouveaux codes permet la mise à jour de la liste des codes autorisés 24 en respectant un protocole prédéfini, à savoir la présence dans la cellule de détection du nouvel émetteur 2 à prendre en compte et la présence dans cette même cellule de détection 1 d'un émetteur spécifique 2 présentant un code qui autorise l'enregistrement des nouveaux messages reçus.

La fonction de correction de seuil 29 permet de définir la cellule de détection 1 par la pré définition d'un seuil. Cependant, la forme de cette cellule de détection 1 est susceptible de varier en fonction de paramètres externes. On peut citer par exemple la présence de perturbations électromagnétiques, les variations de température, d'hygrométrie, ou bien aussi la présence ou l'absence de la personne autorisée dans cette cellule de détection. La fonction de correction de seuil 29 est une fonction qui corrige le seuil 28 prédéfini, dit consigne de seuil, en fonction des entrées : niveau des perturbations électromagnétiques, réflexions et réfractions des ondes sur les parois des bâtiments en zone urbaine, température, degré d'hygrométrie, présence ou absence de la personne autorisée. Ceci de façon à réajuster la cellule de détection 1 à la forme désirée.

La présente invention peut trouver une application dans l'identification d'objets, tel que le repérage de colis dans la remorque d'un camion par exemple. Elle peut également permettre de déclencher des actions de type domotique, telles la mise en route de lumières, musique, chauffage, vidéo, volets roulants.

## Revendications

1. Dispositif actif d'identification électronique automatique sécurisé pour antivol de véhicule automobile ou autre, ou la détection de la présence ou non de une ou plusieurs personnes, ou objets, dans un espace prédéfini appelé cellule de détection, comprenant au moins un émetteur (2), lié à un utilisateur potentiel, et un récepteur (3), lié à l'objet à protéger, lesdits émetteur (2) et récepteur (3) comportant des moyens d'évaluation de la distance seuil d'activation (26) de la serrure dudit véhicule par l'analyse de la puissance reçue par ledit récepteur (3), **caractérisé en ce que** d'une part le ou les émetteurs (2) comportent des moyens de codage tournant(7) sous la forme moyens électroniques aptes à assurer une fonction de codage tournant (8) et permettant d'émettre un message différent à chaque fois à l'aide de codes (30), des moyens de cryptage (9) consistant en des moyens électroniques aptes à assurer une fonction de cryptage (10) assurant l'émission d'un message différent à chaque envoi à l'aide d'une clé privée (11) et ne donnant pas d'information sur la valeur du code, des moyens d'encodage (28) consistant en des moyens électroniques aptes à assurer une fonction d'encodage (29) transposant le code devant être émis régulièrement dans une base de codes présentant une faible probabilité de niveaux hauts, respectivement, et d'autre part le récepteur comporte des moyens de désencodage (21) sous la forme de moyens électroniques aptes à assurer une fonction de décodage (22) réciproque inverse de la fonction d'encodage (28), et assurant la transposition d'un codeur de code dans sa base de codage d'origine, des moyens de décryptage (18) consistant en des moyens électroniques aptes à assurer une fonction de décryptage (19) réciproque inverse de la fonction de cryptage (10) permettant de donner en sortie la valeur du code en ayant en entrée le message crypté, la date (32) et la clé (20), des moyens de décodage tournant consistant en des moyens électroniques aptes à assurer une fonction de décodage tournant (32) réciproque inverse de la fonction de codage tournant (8) et rétablissant le message originel par le code (33) et la date (34) respectivement.

2. Dispositif selon la revendication 1, **caractérisé en ce que** l'émetteur (2) comporte :
- une alimentation (5) propre,
- une horloge 6 de temporisation permettant d'émettre de façon cadencée et de dater les signaux envoyés,
- un moyen de codage tournant (7) apte à mettre en oeuvre une fonction de codage tournant (8) à l'aide d'un code associé (30),
- un moyen de cryptage (9) apte à mettre en oeuvre une fonction de cryptage (10) à l'aide d'une clé de cryptage associée (11) et d'un code associé (30),
- un moyen d'encodage (28) apte à mettre en oeuvre une fonction d'encodage (29) à faible présence de niveaux hauts,
- un boîtier émetteur (12), système de modulation et d'émission des ondes,
- une antenne émettrice (13),
- un signal porté (14),

3. Dispositif selon la revendication 2, **caractérisé en ce que** le récepteur (3) comporte l'ensemble des éléments de l'émetteur (2) agencés de façon inverse, ainsi que des moyens d'évaluation du seuil d'activation, à savoir :
- un signal porté (14),
- une antenne réceptrice (15),
- une alimentation (16) propre,
- un boîtier récepteur (17), système de démodulation et de réception des ondes,
- un moyen de désencodage (21) apte à mettre en oeuvre une fonction de désencodage (22),
- un moyen de décryptage (18) apte à mettre en oeuvre une fonction de décryptage (19) à l'aide d'une clé de décryptage (20) et d'une date (32) associées,
- un moyen de décodage tournant (31) apte à mettre en oeuvre une fonction de décodage tournant (32) à faible présence de niveaux hauts, émettant un code (33) et une date (34),
- un comparateur de dates (35), en aval de ladite date (34), associé à une fonction de synchronisation (36), une temporisation (37) et une date interne (38),
- un comparateur de codes (23) associé à une liste de codes (24) et à une procédure de validation de nouveaux codes (25),
- un signal de présence (30), agissant sur la serrure du véhicule,
- ainsi qu'en aval dudit boîtier récepteur (17) un moyen d'évaluation du seuil (26) sous forme d'une fonction comparateur (27) associée à une consigne de seuil (28) et à une fonction de correction de seuil (29).

## Patentansprüche

1. Sichere, aktive, automatische, elektronische Identifizierungsvorrichtung gegen Diebstahl von Automobilfahrzeugen oder dergleichen oder zur Detektion der An- oder Abwesenheit einer oder mehrerer Personen oder Gegenstände in einem vorbestimmten Raum, der als Detektionszelle bezeichnet wird, umfassend wenigstens einen Sender (2), der mit einem potentiellen Benutzer verbunden ist, und einen Empfänger (3), der mit dem zu schützenden Gegenstand verbunden ist, wobei die besagten Sender (2) und Empfänger (3) Mittel zur Evaluation der Schwelldistanz zur Aktivierung (26) des Schlosses des besagten Fahrzeugs durch die Analyse der durch den besagten Empfänger (3) empfangenen Kraft umfassen, **dadurch gekennzeichnet, daß**, einerseits, der oder die Sender (2) Rotationscodierungsmittel (7) in Form von elektronischen Mitteln, geeignet, um eine Rotationscodierungsfunktion (8) zu sichern und erlaubend, jedesmal eine verschiedene Meldung mittels Codes (30) zu senden, Verschlüsselungsmittel (9), die aus elektronischen Mitteln bestehen, die geeignet sind, um eine Verschlüsselungsfunktion (10) zu sichern, die die Sendung einer verschiedenen Meldung bei jeder Sendung mittels eines privaten Schlüssels (11) sichert und keine Information über den Wert des Codes gibt, Codierungsmittel (28), die aus elektronischen Mitteln bestehen, die geeignet sind, um eine Codierungsfunktion (29) zu sichern, transponierend den Code, der regelmäßig gesendet werden muß, in einer Codedatenbank, die beziehungsweise eine schwache Wahrscheinlichkeit hoher Pegel aufweist, umfassen und, andererseits, der Empfänger Dekodierungsmittel (21) in Form von elektronischen Mitteln, die geeignet sind, um eine zur Codierungsfunktion (28) inverse, reziproke Dekodierungsfunktion (22) zu sichern, und sichernd die Umsetzung eines Codecodierers in seiner ursprünglichen Codierungsdatenbank, Entschlüsselungsmittel (18), die aus elektronischen Mitteln bestehen, die geeignet sind, um eine zur Verschlüsselungsfunktion (10) inverse, reziproke Entschlüsselungsfunktion (19) zu sichern, die es erlaubt, am Ausgang den Wert des Codes anzugeben, habend am Eingang die verschlüsselte Meldung, das Datum (32) und den Schlüssel (20), Mittel zur Rotationsdekodierung, die aus elektronischen Mitteln bestehen, die geeignet sind, um eine zur Rotationscodierungsfunktion (8) inverse, reziproke Rotationsdekodierungsfunktion (32) zu sichern, und die die ursprüngliche Meldung beziehungsweise durch den Code (33) und das Datum (34) wiederherstellt, umfaßt.

2. Vorrichtung nach Anspruch 1, **dadurch gekennzeichnet, daß** der Sender (2) folgendes umfasst :
- eine eigene Stromversorgung (5),
- eine Verzögerungsuhr 6, erlaubend, Signale in regelmäßigem Abstand zu senden und die geschickten Signale zu datieren,
- ein Rotationscodierungsmittel (7), das geeignet ist, eine Rotationscodierungsfunktion (8) mittels eines zugeordneten Codes (30) anzuwenden,
- ein Verschlüsselungsmittel (9), das geeignet ist, eine Verschlüsselungsfunktion (10) mittels eines zugeordneten Verschlüsselungsschlüssels (11) und eines zugeordneten Codes (30) anzuwenden,
- ein Codierungsmittel (28), das geeignet ist, um eine Codierungsfunktion (29) mit geringer Anwesenheit hoher Pegel anzuwenden,
- einen Senderkasten (12), System zur Modulation und Ausstrahlung der Wellen,
- eine Sendeantenne (13),
- ein getragenes Signal (14).

3. Vorrichtung nach Anspruch 2, **dadurch gekennzeichnet, daß** der Empfänger (3) die Gesamtheit der nach umgekehrter Art und Weise angeordneten Elemente des Senders (2), sowie Mittel zur Evaluation der Aktivierungsschwelle umfaßt, nämlich :
- ein getragenes Signal (14),
- eine Empfangsantenne (15),
- eine eigene Stromversorgung (16),
- einen Empfängerkasten (17), System zur Demodulation und zum Empfang der Wellen,
- ein Dekodierungsmittel (21), das geeignet ist, um eine Dekodierungsfunktion (22) anzuwenden,
- ein Entschlüsselungsmittel (18), das geeignet ist, um eine Entschlüsselungsfunktion (19) mittels zugeordneter Entschlüsselungsschlüssel (20) und Datum (32) anzuwenden,
- ein Rotationsdekodierungsmittel (31), das geeignet ist, um eine Rotationsdekodierungsfunktion (32) mit geringer Anwesenheit hoher Pegel anzuwenden, sendend einen Code (33) und ein Datum (34),
- einen Datenkomparator (35) unterhalb des besagten Datums (34), der einer Synchronisierungsfunktion (36), einer Verzögerung (37) und einem inneren Datum (38) zugeordnet ist,
- einen Codekomparator (23), der einer Liste von Codes (24) und einem Verfahren zur Validierung der neuen Codes (25) zugeordnet ist,
- ein Anwesenheitssignal (30), das auf das Schloß des Fahrzeugs wirkt,
- sowie unterhalb des besagten Empfangskastens (17) ein Mittel zur Evaluation der Schwelle (26) in Form von einer Komparatorfunktion (27), die einem Schwellen-Sollwert (28) und einer Schwellenkorrekturfunktion (29) zugeordnet ist.

## Claims

1. Secure active automatic electronic identification device against theft of motor vehicles or the like or for detecting the presence or absence of one or several individuals or objects in a predefined space, referred to as detection cell, comprising at least one transmitter (2) connected to a potential user, and one receiver (3) connected to the object to be protected, said transmitter (2) and receiver (3) including means for evaluating the threshold distance for activating (26) the lock of said vehicle through analysing the power received by said receiver (3), **characterised in that**, on the one hand, the transmitter or transmitters (2) include rotary coding means (7) in the form of electronic means capable of ensuring a rotary coding function (8) and allowing to send each time a different message by means of codes (30), encrypting means (9) consisting of electronic means capable of ensuring an encrypting function (10) ensuring the sending of a different message at each sending, by means of a private key (11) and providing no information on the value of the code, encoding means (28) consisting of electronic means capable of ensuring an encoding function (29) transposing the code to be periodically transmitted in a code database having a low likeliness of high levels, respectively, and, on the other hand, the receiver includes decoding means (21) in the form of electronic means capable of ensuring a reverse reciprocal decoding function (22) with respect to the encoding function (28), and ensuring the transposition of a code encoder in its original coding database, decrypting means (18) consisting of electronic means capable of ensuring a reverse reciprocal decrypting function (19) with respect to the encrypting function (10) allowing to provide at the output the value of the code and having, at its input, the encrypted message, the date (32) and the key (20), rotary decoding means consisting of electronic means capable of ensuring a reverse reciprocal rotary decoding function (32) with respect to the rotary encoding function (8) and restoring the original message by means of the code (33) and the date (34), respectively.

2. Device according to claim 1, **characterised in that** the emitter (2) includes :
- an own power supply (5),
- a delay clock 6 allowing to transmit signals at regular intervals and to date the transmitted signals,
- rotary encoding means (7) capable of implementing a rotary encoding function (8) by means of an associated code (30),
- encrypting means (9) capable of implementing an encrypting function (10) by means of an associated encrypting key (11) and an associated code (30),
- encoding means (28) capable of implementing an encoding function (29) with low presence of high levels,
- an emitter casing (12), system for modulating and transmitting waves,
- an emitting aerial (13),
- a carried signal (14).

3. Device according to claim 2, **characterised in that** the receiver (3) includes all the components of the transmitter arranged in a reversed way (2) as well as means for evaluating the activation threshold, namely :
- a carried signal (14),
- a receiving aerial (15),
- an own power supply (16),
- a receiver casing (17), system for demodulating and receiving waves,
- decoding means (21) capable of implementing a decoding function (22),
- decrypting means (18) capable of implementing a decrypting function (19) by means of an associated decrypting key (20) and date (32),
- rotary decoding means (31) capable of implementing a rotary decoding function (32) with low presence of high levels, transmitting a code (33) and a date (34),
- a date comparator (35), downstream of said date (34), associated with a synchronisation function (36), a time delay (37) and an internal date (38),
- a code comparator (23) associated with a list of codes (24) and a validation process for new codes (25),
- a presence signal (30) acting on the lock of the vehicle,
- as well as, downstream of said receiver casing (17), means for evaluating the threshold (26) in the form of a comparator function (27) associated with a set threshold (28) and a threshold-correction function (29).
